# EUROPEAN PATENT SPECIFICATION

(11) **EP 0 677 913 B1**
(45) Date of publication and mention of the grant of the patent: **03.12.1997**
(21) Application number: 94105793.7
(22) Date of filing: 14.04.1994
(51) Int. Cl.: H02K 5/14, H02K 5/167, H02K 7/116, G10F 1/06, H02K 13/00

(54) **Small brush-use DC motor and music device**
Kleiner Gleichstrommotor mit Bürsten und Musikgerät
Petit moteur à courant continu avec balais et appareil de musique

(43) Date of publication of application: 18.10.1995
(73) Proprietor: KABUSHIKI KAISHA SANKYO SEIKI SEISAKUSHO, Suwa-gun Nagano 393 (JP)
(72) Inventor: Orii, Makoto, c/o K. K. Sankyo Seiki, Suwa-gun, Nagano (JP); Hayashi, Katsuhiko, c/o K. K. Sankyo Seiki, Suwa-gun, Nagano (JP)
(74) Representative: Henkel, Feiler, Hänzel & Partner

(56) References cited:
- DE-A- 3 911 592
- DE-A- 4 110 971
- FR-A- 2 392 515
- US-A- 2 987 638
- DATABASE WPI Section EI, Week 8811, 15 August 1987 Derwent Publications Ltd., London, GB; Class V04, AN 88-076709 & SU-A-1 330 680

## Description

### BACKGROUND OF THE INVENTION

### Filed of the invention

The present invention relates to a small brush-use DC motor and to a music device employing such motor.

### Related Art

A conventional small brush-use DC motor is disclosed in Unexamined Japanese Utility Model Publication No. Sho. 64-54754, for example. The DC motor is constructed as shown in Fig. 8.

In Fig. 8, reference numeral 71 designates a stator case 71, shaped like a cup. The stator case 71 has a tubular portion 71b in the central part of the bottom thereof. The tubular portion 71b passes through the bottom of the stator case 71.

A first bearing 80 is fitted into and fixed to the tubular portion 71b. A side plate 73 is pressed to or press fitted to the open end (the top side thereof in the drawing) of the stator case 71. A brush holder 74 is fastened on the inner side of the side plate 73 by means of screws or resin molding.

A cap-like portion 74a is protruded upward (toward the side plate 73) in the central part of the brush holder 74. A second bearing 81 is fit into and fixed to the tubular portion 74a.

The first and second bearings 80 and 81 cooperate to rotatably support a rotary shaft 82 of an armature 76.

An armature core 84 with a winding 83 thereon and a commutator unit 85, both being fit to the rotary shaft 82, make up the armature 76. A ring-like magnet 72 is disposed in opposition to the peripheral outer surface of the armature core 84, with a predetermined gap therebetween. The ring-like magnet 72 is fastened to the peripheral inner surface of the cup-like stator case 71.

A contact part 75b, which is formed at the distal end of the brush 75, comes in contact with the peripheral surface of the commutator unit 85 in a slidable fashion. The base of the brush 75 is fastened to the brush holder 74. The brush 75 has a terminal 75a with a hole, not shown. The hole of the terminal 75a is fit into the tubular portion 74a of the brush holder 74, and positioned at the location where the hole of the terminal 75a is fitted and the tubular portion 74a is thermally deformed and welded.

A window hole 71a is formed in the stator case 71. The terminal 75a of the brush 75 passes through the window hole 71a to exterior. A collar 86 is fit to the lower part of the rotary shaft 82, which is located below the armature core 84.

The terminal 75a of the brush 75 is connected to a power source, not shown. The commutator unit 85, which is brought into press contact with the contact part 75b of the brush 75, is mounted thereon. The small DC motor is driven to rotate by changing the direction and phase of a current fed from the brush 75.

In the DC motor thus constructed, a clearance is present between the rotary shaft and the first and second bearings. The clearance possibly allows the related part, or the rotary shaft, to move in the radial direction. When the motor is driven, the play of the related part will create motor noise.

An attempt to reduce the play is one of the ways to reduce the motor noise. However, this attempt creates another problem. That is, when the play is reduced, the rotary shaft comes in area contact with the first and second bearings. The rotation resistance of the rotary shaft when it rotates being supported by the first and second bearings increases.

The small brush-use DC motor of the type in which the tubular-shaped commutator unit is used, generates low noise and has good motor performances. However, this type motor is disadvantageous in that because of the tubular shape of the commutator unit, the tubular commutator unit occupies a larger space expanding in the longitudinal direction.

In this type of the DC motor, the brush-to-brush spatial distance is narrower than the width (diameter) of the commutator unit. For this reason, in assembling the motor, the commutator unit must be inserted in the narrow brush-to-brush space. This makes the assembling work difficult.

A small brush-use DC motor of the type in which the commutator unit is of the disk type, is also known. This type of the DC motor, unlike the DC motor using the tubular commutator, is free of the difficulty of the assembling work, but it is disadvantageous in that the disk-like commutator unit occupies a larger space expanding in the radial direction than the tubular commutator unit.

In the motor-driven music box disclosed in Examined Japanese Utility Model Publication No. Hei. 1-21357, the rotary drum, the vibrating plates, the reduction gear train, and the DC motor are supported by a frame as the base board of the music box.

The gears of the reduction gear train are rotatably supported in a manner that the axes of the gears are inserted into indentations or bearings. The DC motor is laterally mounted on the frame such that the rotor shaft is in parallel with the frame, and the base plate of the motor is fastened to the frame by means of screws.

As described above, to mount the DC motor on the frame, the motor base plate must be fastened to the frame by means of screws, while to assemble the reduction gears into the frame since, the gears are merely put down into the indentations or bearings. In this respect, the DC motor mounting work is more difficult than the gear assembling work.

From DE 41 10 971 A1 there is known a brush-use DC motor for driving auxiliary devices in an automobile. This motor has a stator case magnet arranged at the inner circumference of a cylindrical housing and a rotor core with a winding which rotor core is rotatably supported in the housing at both axial ends. The magnet and the rotor winding are staggered in the direction of an axis of rotation so that the rotor is biased towards brushes held in contact with a commutator provided at one end of the rotor due to the resulting magnetic force. The contact poles of the commutator of this motor are arranged either conically or coplanar in a plane orthogonal to the axis of rotation.

### SUMMARY OF THE INVENTION

It is an object of the present invention to provide a small brush-use motor and a music device, in which a play of the rotary shaft of the motor is removed, in which a motor noise is reduced and which provides facilitated assembling.

According to the present invention there is provided a small brush-use DC motor comprising: a stator member including a first stator case in which a magnet is disposed; a rotor member including a rotor core on which a coil is wound; a commutator unit having a commutator on a conical portion thereof, the commutator rotating together with the rotor member; brushes held by a second stator case in such a manner that the brushes are brought into contact with the commutator under a predetermined pressure; a rotary shaft for holding the rotor member and the commutator unit so as to rotate together with the rotor member and the commutator unit; a bearing portion for supporting and guiding the shaft, the bearing portion being provided in the first stator case, wherein a magnetic center plane of the rotor core being staggered with respect to a magnetic center plane of the magnet such that an urged direction of the rotor core by a magnetic attraction force of the magnet is in the direction for minimizing a clearance between the commutator unit and the bearing portion.

According to the present invention there is also provided a music device comprising: a rotary drum having a plurality of pins arranged in the surface thereof in accordance with a music piece; a plurality of vibrating plates sounded by the pins of the rotary drum; a small brush-use DC motor according to any one of claims 1 to 4, for driving the rotary drum through a reduction gear train; and a frame for supporting the rotary drum, the vibrating plates, the reduction gear train, and the small brush-use DC motor, the small brush-use DC motor being supported by the frame in such a manner that the shaft for supporting the rotor member of the small brush-use DC motor and the commutator unit is orthogonal to the frame to support the small brush-use DC motor.

Preferred embodiments of the small bush-use motor and of the music device are defined in the subclaims.

According to the present invention, in the brush-use DC motor, the clearance between the shaft and the bearing is reduced to a minimum. And those contact with each other linearly. The armature can be turned smoothly, and the motor noise is reduced.

With the conical shape of the commutator, the space of the motor assembly can be reduced in the axial direction when compared with the conventional one. The result is to reduce noise, to be flattened in shape, and to provide an easy assembling work.

According to the present invention, the music boxes employ the small brush-use DC motors of the embodiments of the invention. Those DC motors as the drive sources for the rotary drums are each mounted on the frame as referred to in one embodiment. The shafts of the DC motors are disposed orthogonal to the frames. Therefore, the DC motors can be readily assembled by merely putting the shafts into the bearing indentations of the frames. Therefore, there is eliminated the conventional complicated assembling work of fastening the motor base plate to the frame by means of screws. This facilitates the automatic assembling work of music boxes.

### BRIEF DESCRIPTION OF THE DRAWINGS

Fig.1 is a sectional side elevation view of a small brush-use DC motor according to the invention;
Fig. 2 is a plan view showing the DC motor of Fig. 1;
Fig .3 is a perspective view showing an armature, which is essential to the present invention;
Fig. 4 is a plan view showing a motor-driven music box according to the present invention.
Fig. 5 is a cross sectional view taken on line A - A in Fig. 4.
Fig. 6 is a cross sectional view showing only the frame of the music box;
Fig. 7 (a) and (b) are plan and cross sectional views of a music box according to an embodiment of the present invention; and
Fig. 8 is a sectional side elevation view of a conventional small brush-use DC motor.

### DETAILED DESCRIPTION OF THE PREFERRED EMBODIMENTS

A first embodiment of the present invention will be described.

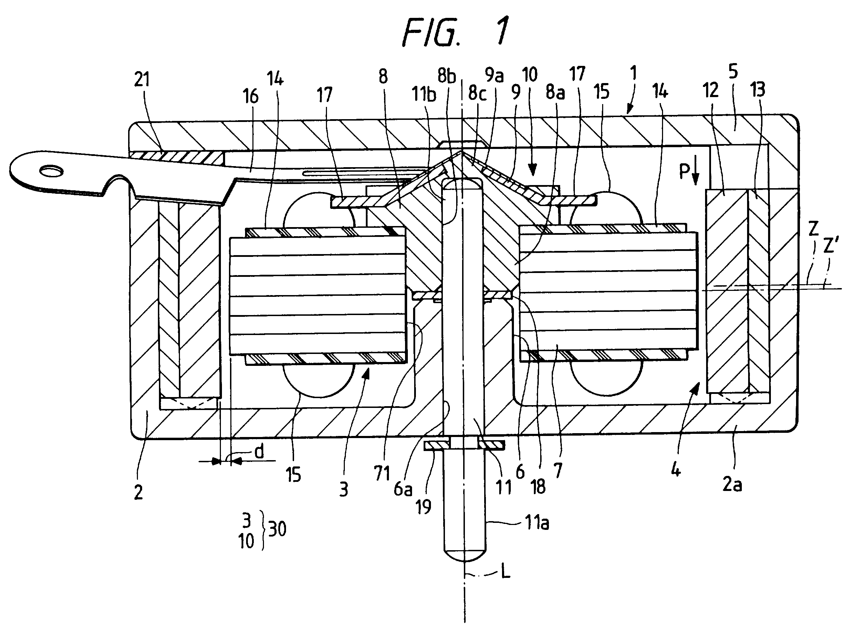

In Fig. 1, reference numeral 1 designates a small DC motor 1 with a brush. As shown, an armature 30 and a stator section 4 are contained in a first stator case 2 of the DC motor 1. A cover 5 as a second stator case is placed on the stator case 2 containing those components for concealing them.

The armature 30 is constructed such that a rotor section 3 and a commutator unit 10 are mounted on a rotary shaft 11.

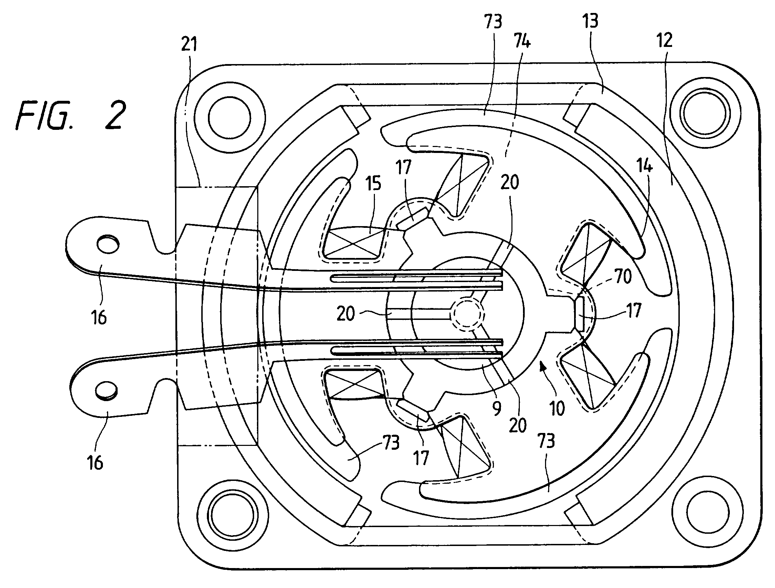

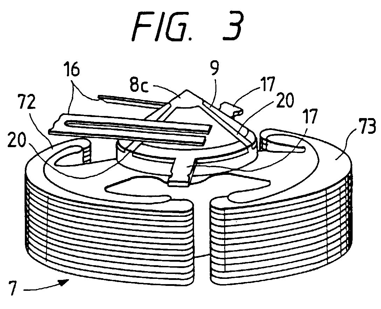

The rotor section 3 includes a rotor core 7, an insulating layer 14 and a winding 15. A plurality of silicone steel plates with excellent magnetic characteristics are laminated into the rotor core 7. As shown in Figs. 2 and 3, a ring-like member 70 is centered in the rotor core 7. A center hole is formed in the central part of the ring-like member 70. A plural number of poles 72 extends radially from the ring-like member 70.

In the first embodiment, the three poles 72 radially extend in the three directions, as shown in Figs. 2 and 3. As a matter of course, the number of poles 72 are not limited to three.

Each pole 72 includes an arcuately outwardly curved umbrella part 73 and a rib 74 which is narrower than the umbrella part 73 and extends between the umbrella part 73 and the ring-like member 70. A predetemined number of turns of windings 15 are wound on each rib 74 with an insulating layer 14 being interposed between them. The insulating layer 14 is provided in order to prevent the turns of the winding from shorting through the rotor core 7. If the winding shorts, the motor fails to operate (or it cannot be driven).

The commutator unit 10 includes a commutator holder 8 and a commutator 9. A bearing portion 6 is upwardly raised from the central part of the bottom 2a of the first stator case 2. The rotary shaft 11 is rotatably inserted into a hole 6a of the bearing portion 6 in such a manner that the free end 11a of the rotary shaft 11 is extended outside the stator case 2, from the bearing hole 6a. A boss 8a of the commutator holder 8, which supports the commutator 9, is fit into the center hole 71 of the ring-like member 70 of the rotor core 7.

A washer 18 is inserted between the bottom surface of the boss 8a and the top surface of the bearing portion 6. The base end 11b of the rotary shaft 11 is press fit into a hole 8b at the bottom of the boss 8a. With this, the commutator holder 8 and the rotary shaft 11 are coupled into a one-piece construction. The commutator holder and the rotary shaft 11 are integrally rotated together.

The commutator holder 8 includes a conical part 8c, as shown in Figs. 1 and 3. The commutator 9, which consists of conical members of which the vertices lie on the axial line of the rotary shaft 11, is formed on the conical part 8c of the commutator holder 8 by insert molding.

The commutator 9, which is for changing the direction of the current flowing through the winding 15, consists of three segments separated by grooves 20, which are formed by a suitable cutting means, not shown, such as a cutter.

A pair of brushes 16 are brought into contact with the surface 9a of the commutator 9. The paired brushes 16 are held by a holder member 21, which is fixed to the inner side of the cover 5, and are connected to a power source, not shown.

The paired brushes 16, which feed current from the power source to the commutator 9, are set to the holder member 21 at the same inclination as that of the conical surface 9a of the commutator 9 by the insert molding. Accordingly, when the cover 5 is mounted on the first stator case 2, the paired brushes 16 come in contact with the commutator 9 while applying a preset pressure on the commutator 9.

Three electrode terminals 17, which extend radially from the commutator holder 8 in three directions, are arranged around the commutator 9. Each of the terminals 17 is connected to the winding 15, which consists of the predetermined number of turns of wires on the rotor core 7.

Arcuate magnets 12 are disposed around the rotor core 7. Each magnet 12 is fastened to the first stator case 2 while a yoke 13 as a part of the stator section 4 is interposed therebetween.

The stator section 4 includes the yokes 13 fastened to the stator case 2 and the magnets 12. The stator section 4 is disposed coaxially with the rotary shaft 11 in a state that the magnet 12 is separated from the rotor core 7 by a predetermined air gap d.

The center plane Z of the rotor section 3 as viewed in the direction of the axis of rotation is staggered with respect to the magnetic center plane Z' of the magnet 12 as viewed also in the direction of the axis of rotation, as shown in Fig. 1. In the illustration of Fig. 1, the magnetic center plane Z' is lower than the center plane Z. At the magnetic center plane Z', the maximum gap magnetic flux density is produced.

With this arrangement, the rotor core 7 is constantly biased toward the magnetic center plane Z', i.e., in the direction of an arrow P, by a magnetic force attraction by the magnets 12. As a result, a clearance between the rotary shaft 11 and the bearing portion 6 is minimized, allowing a smooth rotation of the motor and hence reducing motor noise.

On the other hand, the magnetic attraction force of the magnet 12 is effected to the rotor section 3 so that the rotor 3 rotates in such a manner that the rotor 3 is brought into contact with the washer 18 toward the arrow P direction such as the first stator case. The washer is employed for suppressing the commutator unit.

Reference numeral 19 designates a snap ring 19. The operation of the brush-use DC motor thus constructed will be described.

Upon power on, current flows through a pair of brushes 16 through the commutator 9 into the winding 15. As a result, the rotor core 7 is magnetized. At this time, the direction and phase of the flowing current are switched by the commutator 9, so that the polarities of the magnetic poles formed vary. The rotor section 3 repels the magnetic field developed by the magnet 12 thereby rotating. With the turn of the rotor section 3, the rotary shaft 11 rotates.

In the DC motor, the conical commutator 9 whose vertex lies on the axial line of the rotary shaft 11 is disposed on the conical part 8c of the commutator holder 8. The hole 8b with the bottom, which supports the rotary shaft 11, is formed in the boss 8a of the commutator holder 8. This construction reduces the axially extending space occupied by the commutator 9, so that the DC motor 1 can be flattened.

It is noted here that because of the conical shape of the commutator 9, the angle of relief of the cutter can be reduced when the grooves 20 are formed in the surface 9a by the cutter, and further the radial extension of the commutator 9 can be reduced. The result is to reduce the peripheral speed of the commutator 9 and to secure the contact area of the brushes 16 and the commutator 9.

In the conventional DC motor of this type, the commutator unit is shaped tubular or like a disk, and the surface of the commutator unit is divided into segments corresponding to the number of poles by grooving the surface by means of a cutter.

If the commutator unit has three poles, the surface of the commutator unit is grooved at locations angularly separated by 120° by means of a cutter.

If the commutator unit is shaped tubular, the cutter or the commutator unit is moved for forming grooves. Accordingly, the groove forming work can be smoothly carried out. To form grooves in the disk-like commutator unit, the relief for the cutting edge of the cutter must be formed at the central part of the commutator unit since the cutting edge is circular. This limits the reduction of the radial size of the commutator unit. An attempt to make the contact area of the brushes equal in size to the commutator unit results in increase of the radial size. Accordingly, the peripheral speed of the commutator unit increases, causing noise.

In the DC motor of the first embodiment, the brushes 16 are previously fastened to the holder member 21 of the cover 5. In assembling the motor, the brushes 16 and the commutator 9 are mutually positioned as intended by merely fixing first the rotor section 3 and then the cover 5 to the stator case 2. In this respect, the assembling work of the motor is improved.

As seen from the foregoing description, in the DC motors of the present invention, the clearance between the shaft and the bearing is reduced to a minimum and they contact with each other linearly. The armature can be turned smoothly, and the motor noise is reduced.

With the conical shape of the commutator, the space of the motor assembly can be reduced in the axial direction when compared with the conventional one. The result is to reduce noise, to be flattened in shape, and to provide an easy assembling work.

An embodiment of the present invention in which the DC motor of the invention is applied to a music box will be described below.

In the music box, called a motor-driven music box, the small DC motor constructed as described above, is used to drive a rotary drum for striking vibrating plates by way of a reduction gear train.

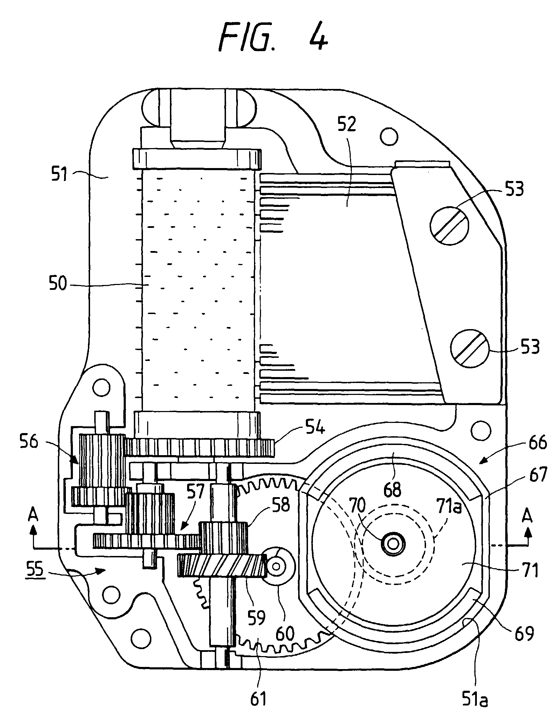

In Fig. 4, reference numeral 50 designates a well rotary drum rotatively supported at both ends thereof by a frame 51. A number of tuned vibrating plates 52, arranged side by side, are fastened to the frame 51 by means of screws. The rotary drum 50 stands in front of the vibrating plate 52. A number of pegs or pins in the surface of the rotary drum 50 strike the tips of the vibrating plates 52 to produce music.

A drum gear 54 is fixed to the bottom end (as viewed in the drawing) of the rotary drum 50. The drum gear 54 meshes with a final gear 56 of a reduction gear train 55.

The reduction gear train 55 consists of a gear 57, a gear 58, a worm gear 59 integral with the gear 58, a worm 60, and a gear 61 integral with the worm 60. The gear 61 is in mesh with a motor gear 71a of an armature 71 of a small brush-use DC motor 66.

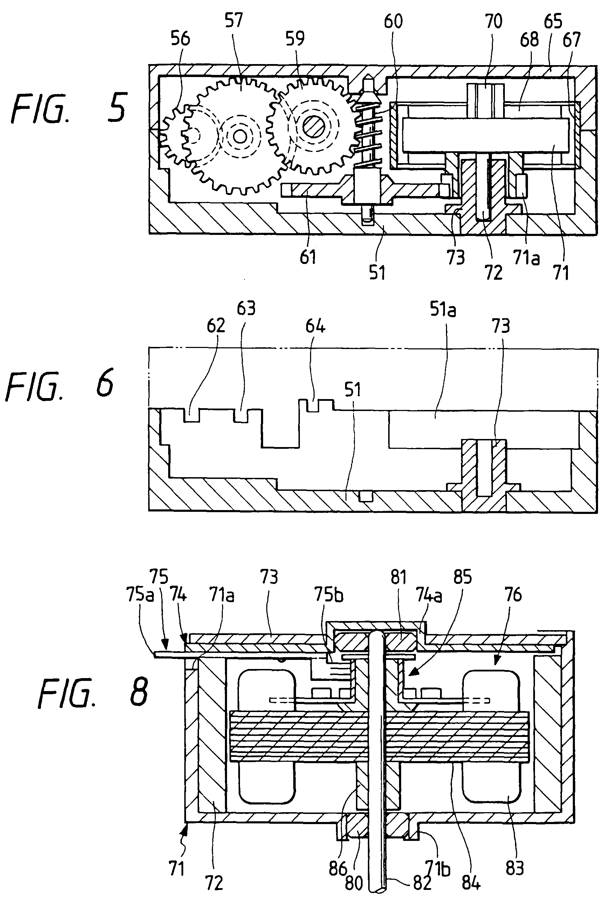

The gears 56, 57, 58, and 59 are supported at both ends thereof in bearing indents 62, 63 and 64 which are opened upward (Fig. 6). The gears 56, 57, 58, and 59 may be assembled by merely putting down those gears into those upward open bearing indents of the frame 51. The worm 60 is supported at one end by the frame 51 and at the other end by a cover 65, which serves as a second stator case. The small brush-use DC motor 66 is located at the lower right corner (as viewed in the drawing) of the frame 51 (Fig. 4).

The DC motor 66 is composed of a yoke 67, a pair of magnets 68 and 69 supported by the yoke 67, the armature 71 with a commutator 70, and a brush (not shown) coming in contact with the commutator 70. The yoke 67 is set in a recess 51a (Figs. 4 and 6) of the frame 51 in such a state that about 2/3 of the circumferential side of the yoke 67 is surrounded by the recess.

Although not shown, the base of the brush of the DC motor 66 is fastened to the cover 65. The armature 71 is supported by the frame 51 such that a shaft 72 (rotatable in one embodiment) of the armature 71, which is to be orthogonal to the frame 51, is put down into a tubular bearing 73 of the frame 51, as the reduction gear train 55.

In assembling the DC motor 66, the yoke 67 having magnets 68 and 69 fastened to the inner side of the yoke is put down into the recess 51a of the frame 51. Then, the shaft 72 of the commutator 70 is merely put into the bearing 73. Finally, the cover 65 with the brush is applied to the frame 51 so that the brush comes in contact with the commutator 70.

In the embodiment illustrated, the tubular bearing 73 is provided separately from the frame 51, but it may be formed integral with the frame 51.

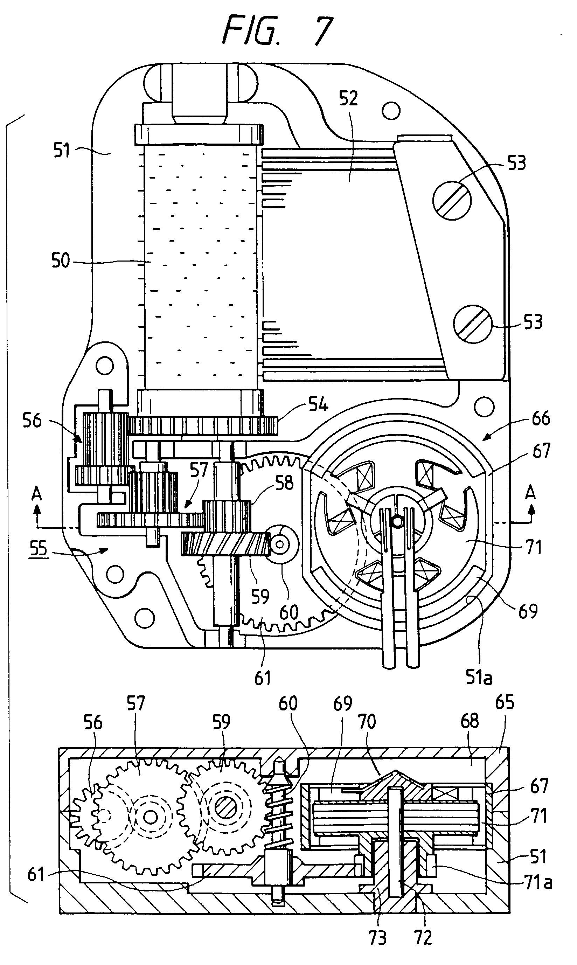

A music box according to another embodiment of the present invention is illustrated in Fig. 7.

The construction of the music box of this embodiment is substantially the same as that of the music box of the previous embodiment except that the commutator unit of the conical structure is employed in the small brush-use DC motor. This type of the commutator unit is as described in detail in connection with Figs. 1 to 3.

As seen from the foregoing description, the music boxe of the present invention employs the small brush-use DC motor of the invention. The DC motor as the drive source for the rotary drum is mounted on the frame as referred to above. The shaft of the DC motor is disposed orthogonal to the frame. Therefore, the DC motor can be readily assembled by merely putting the shaft into the bearing indentations of the frame. Therefore, there is eliminated the conventional complicated assembling work of fastening the motor base plate to the frame by means of screws. This facilitates the automatic assembling work of music boxes.

## Claims

1. A small brush-use DC motor comprising:
a stator member (4) including a first stator case (2) in which a magnet (12) is disposed;
a rotor member (3) including a rotor core (7) on which a coil (15) is wound;
a commutator unit (10) having a commutator (9) on a conical portion (8c) thereof, the commutator (9) rotating together with the rotor member (3);
brushes (16) held by a second stator case (5) in such a manner that the brushes (16) are brought into contact with the commutator (9) under a predetermined pressure;
a rotary shaft (11) for holding the rotor member (3) and the commutator unit (10) so as to rotate together with the rotor member (3) and the commutator unit (10);
a bearing portion (6) for supporting and guiding the shaft (11), the bearing portion (6) being provided in the first stator case (2),
wherein a magnetic center plane (Z) of the rotor core (7) being staggered with respect to a magnetic center plane (Z') of the magnet (12) such that an urged direction of the rotor core (7) by a magnetic attraction force of the magnet (12) is in the direction for minimizing a clearance between the commutator unit (10) and the bearing portion (6).

2. The small brush-use DC motor as claimed in claim 1, wherein the urged direction of the rotor core (7) by the magnetic attraction force of the magnet (12) is the same direction in which the predetermined pressure is applied when the brushes (16) are brought into contact with the commutator (9).

3. The small brush-use DC motor as claimed in claim 1 or 2, wherein a washer (18) is provided on the support shaft (11) at the bearing portion (6) for suppressing the commutator unit (10).

4. The small brush-use DC motor as claimed in claim 1, 2 or 3, wherein the bearing portion (6) comprises a bearing hole (6a) for rotatably supporting the rotary shaft (11).

5. A music device comprising:
a rotary drum (50) having a plurality of pins arranged in the surface thereof in accordance with a music piece;
a plurality of vibrating plates (52) sounded by the pins of the rotary drum (50);
a small brush-use DC motor (66) according to any one of claims 1 to 4, for driving the rotary drum (50) through a reduction gear train (55); and
a frame (51) for supporting the rotary drum (50), the vibrating plates (52), the reduction gear train (55), and the small brush-use DC motor (66), the small brush-use DC motor (66) being supported by the frame in such a manner that the shaft (72,11) for supporting the rotor member of the small brush-use DC motor (66) and the commutator unit is orthogonal to the frame (51) to support the small brush-use DC motor (66).

6. The music device as claimed in claim 5, wherein one end of the shaft (72,11) for supporting the rotor member of the small brush-use DC motor (66) and the commutator unit thereof is supported by the frame (51).

## Patentansprüche

1. Kleiner Gleichstrommotor mit Bürsten, umfassend:
ein Statorelement (4) mit einem ersten Statorgehäuse(teil) (2), in welchem ein Magnet (12) angeordnet ist,
ein Rotorelement (3) mit einem Rotorkern (7), der mit einer Spule bzw. Wicklung (15) bewickelt ist,
eine Kommutatoreinheit (10) mit einem Kommutator (9) auf einem konischen Abschnitt (8c) derselben, welcher Kommutator (9) sich mit dem Rotorelement (3) mitdreht,
Bürsten (16), die durch ein zweites Statorgehäuse(teil) (5) so gehalten sind, daß die Bürsten (16) unter einem vorbestimmten Druck mit dem Kommutator (9) in Kontakt gebracht sind,
eine Dreh-Welle (11) zum Halten des Rotorelements (3) und der Kommutatoreinheit (10) für Mitdrehung mit dem Rotorelement (3) und der Kommutatoreinheit (10), (und)
ein im ersten Statorgehäuse (2) vorgesehenes Lagerelement (6) zum Lagern und Führen der Welle (11),
wobei eine magnetische Mittelebene (Z) des Rotorkerns (7) gegenüber einer magnetischen Mittelebene (Z') des Magneten (12) so versetzt ist, daß eine Vorbelastungsrichtung des Rotorkerns (7) aufgrund einer magnetischen Anziehungskraft des Magneten (12) in der Richtung zum Minimieren eines Zwischenraums zwischen der Kommutatoreinheit (10) und der (dem) Lagersektion (bzw. -element) (6) liegt.

2. Kleiner Gleichstrommotor mit Bürsten nach Anspruch 1, wobei die Vorbelastungsrichtung des Rotorkerns (7) aufgrund einer magnetischen Anziehungskraft des Magneten (12) die gleiche Richtung ist, in welcher der vorbestimmte Druck ausgeübt wird, wenn die Bürsten (16) mit dem Kommutator (9) in Kontakt gebracht sind.

3. Kleiner Gleichstrommotor mit Bürsten nach Anspruch 1 oder 2, wobei an der Trag- bzw. Dreh-Welle (11) eine Scheibe (18) an der (dem) Lagersektion (bzw. -element) (6) zur Unterdrückung (supressing) (vermutlich: Halterung oder Lagerung) der Kommutatoreinheit (10) vorgesehen ist.

4. Kleiner Gleichstrommotor mit Bürsten nach Anspruch 1, 2 oder 3, wobei der (das) Lagerabschnitt (bzw. -element) (6) eine Lagerbohrung (6a) zur drehbaren Lagerung der Dreh-Welle (11) aufweist.

5. Musikgerät, umfassend:
eine rotierende Trommel bzw. Drehwalze (50) mit einer Vielzahl von Stiften, die in ihrer Oberfläche entsprechend einem Musikstück angeordnet sind,
eine Anzahl von schwingenden Platten bzw. Zungen (52), die durch die Stifte der Drehwalze (50) zum Klingen bringbar sind,
einen kleinen Gleichstrommotor (66) mit Bürsten nach einem der Ansprüche 1 bis 4 zum Antreiben der Drehwalze (50) über ein Untersetzungs(zahnrad)getriebe (55) und
einen Rahmen (51) zum Haltern bzw. Lagern der Drehwalze (50), der schwingenden Zungen (52), des Untersetzungsgetriebes (55) und des kleinen Gleichstrommotors mit Bürsten, welcher kleine Gleichstrommotor (66) mit Bürsten durch den Rahmen so gehaltert ist, daß die Welle (72, 11) zum Tragen des Rotorelements des kleinen Gleichstrommotors (66) mit Bürsten und der Kommutatoreinheit orthogonal zum Rahmen (61) liegt, um den kleinen Gleichstrommotor (66) mit Bürsten zu haltern oder zu tragen.

6. Musikgerät nach Anspruch 5, wobei ein Ende der Welle (72, 11) zum Tragen des Rotorelements des kleinen Gleichstrommotors (66) mit Bürsten und seiner Kommutatoreinheit durch den Rahmen (51) gelagert ist.

## Revendications

1. Petit moteur à courant continu à collecteur comprenant :
un élément stator (4) comprenant une première boîte de stator (2) dans laquelle est disposé un aimant (12) ;
un élément rotor (3) comprenant un noyau de rotor (7) sur lequel est bobiné un enroulement (15) ;
une unité de collecteur (10) ayant un collecteur (9) sur une portion conique (8c) de cette unité, le collecteur (9) tournant avec l'élément rotor (3) ;
des balais (16) tenus par une deuxième boîte de stator (5) de telle manière que les balais (16) soient mis en contact avec le collecteur (9) sous une pression prédéterminée ;
un arbre rotatif (11) destiné à tenir l'élément rotor (3) et l'unité collecteur (10) de façon à tourner avec l'élément rotor (3) et l'unité de collecteur (10) ;
un élément palier (6) destiné à supporter et guider l'arbre (11), l'élément palier (6) étant prévu dans la première boîte de stator (2),
dans lequel un plan central magnétique (Z) du noyau (7) du rotor est décalé par rapport à un plan central magnétique (Z') de l'aimant (12) de manière que le sens de sollicitation du noyau (7) du rotor engendré par la force d'attraction magnétique de l'aimant (12) soit dans le sens qui tend à réduire le jeu entre l'unité de collecteur (10) et la section palier (6).

2. Petit moteur à courant continu à collecteur selon la revendication 1, dans lequel le sens de sollicitation du noyau (7) du rotor engendré par la force d'attraction magnétique de l'aimant (12) est le même sens que celui dans lequel la pression prédéterminée est appliquée lorsque les balais (16) sont mis en contact avec le collecteur (9).

3. Petit moteur à courant continu à collecteur selon la revendication 1 ou 2, dans lequel une rondelle (18) est prévue sur l'arbre support (11) au niveau de la section de palier (6) pour repousser l'unité de collecteur (10).

4. Petit moteur à courant continu à collecteur selon la revendication 1, 2 ou 3, dans lequel la portion de palier (6) comprend un trou de palier (6a) pour supporter l'arbre rotatif (11) en rotation.

5. Dispositif musical comprenant :
un tambour rotatif (50) portant une pluralité de chevilles agencées dans sa surface en accord avec un morceau de musique ;
une pluralité de plaques vibrantes (52) que les chevilles du tambour rotatif (50) font sonner ;
un petit moteur à courant continu à collecteur (66) selon une quelconque des revendications 1 à 4, pour entraîner le tambour rotatif (50) par l'intermédiaire d'un train d'engrenages de réduction (55) ; et
une carcasse (51) pour supporter le tambour rotatif (50), les plaques vibrantes (52), le train d'engrenage de réduction (55) et le petit moteur à courant continu collecteur (66), le petit moteur à courant continu collecteur (66) étant supporté par la carcasse de telle manière que l'arbre (72, 11) servant à supporter l'élément rotor du petit moteur à courant continu à collecteur (66) et l'unité de collecteur soit orthogonal à la carcasse (51) pour supporter le petit moteur à courant continu à collecteur (66).

6. Dispositif musical selon la revendication 5, dans lequel une extrémité de l'arbre (72, 11) destinée à supporter l'élément rotor du petit moteur à courant continu à collecteur (66) et l'unité de collecteur de ce moteur est supportée par la carcasse (51).
